# EUROPEAN PATENT APPLICATION

(11) **EP 4 336 398 A1**
(43) Date of publication of application: **13.03.2024**
(21) Application number: 23179657.4
(22) Date of filing: 16.06.2023
(51) Int. Cl.: G06F 21/62

(54) **SMART PEST TRAP AS IOT IN POLICY FABRIC AND SHARING SYSTEM FOR ENABLING MULTI-PARTY DATA PROCESSING IN AN IOT ENVIRONMENT**

(30) Priority: 07.09.2022 US 202217930163; 16.09.2022 WO PCT/US2022/076558
(71) Applicant: Microshare, Inc., Philadelphia, PA 19103 (US)
(72) Inventor: PANAGOS, Timothy, Boxford, MA, 01921 (US)
(74) Representative: Bjerkén Hynell KB

(57) **Abstract**

Methods and systems for storing, managing, and sharing data includes at least one shareable asset that shares data from source content; one or more owners with joint rights of ownership to at least one shareable asset; a requestor that requests at least one shareable asset; and a policy fabric that (1) assigns static and dynamic ownership rights to shareable assets; (2) contains rules contributed by one or more owners which express the intent of each owner relative to the disposition of the underlying shared asset with respect to attributes of shareable assets, attributes of requests and requestors, and contextual reference information; and (3) applies the applicable rules when a requestor requests access to a shareable asset with protections for potentially conflicting interests of multiple owners. An IoT device within the system may be a pest trap.

## Description

Internet of Things, mobile computing, and multitenant cloud-based computing is driving massive increases in volume, variety, and velocity of data. Digital systems must increasingly manage data that whose logical or legal rights can be ascribed simultaneously to multiple parties. These rights must also be considered fluid due to the impact of changing regulations and ever-evolving relationships between data collecting and data consuming entities. All of these factors have raised new challenges in the governance of underlying data that are unmet by models for access sharing based on single, static ownership models. More sophistication is necessary to ensure that the disposition of data for operational, marketing, and analytic purposes follows the intents and rights of its various stakeholders.

In the currently implemented computing systems, the act of sharing data requires an excess of storage space, network traffic, and CPU processing cycles. Typically, a shared dataset is stored by the owner on a hard drive or similar computer storage media. As the data is shared it may be transmitted over a network connection to a remote computer system where it must also be stored on computer storage media. For each act of sharing, the consumption of network resources and storage resources is duplicated creating unnecessary costs for all participants. The desirability of each of these transactions is managed either by ad-hoc human decisions (as with email or FTP of files) or through computer software logic that must be embedded in both the sending computer system and the receiving computer system (as with APIs or SDKs). In these cases, a change in the logic of sharing requires that multiple computer system be updated before the change can be rendered into practice. Furthermore, by allowing the data to be copied to a remotely controlled computer system, the original owner of that data loses knowledge and control of additional uses for that duplicated data.

### SUMMARY OF THE EMBODIMENTS

The invention described herein eliminates the need for duplicative storage of data and network traffic making the act of sharing data computationally efficient. And by centralizing the computational decision logic in a single computer system it allows for owners to centrally manage their data assets to eliminate the need to update the software code of multiple computer systems in order to enact a change. The embodiments described herein ensure that sharing logic remains flexible, data sharing is fast and efficient by streamlining access decisions into a single core system component.

A method and system for storing, managing, and sharing data stored in a computational system that includes at least one shareable asset that makes data from source content accessible by remote computer systems connected through a network; one or more owners with joint rights of ownership to at least one shareable asset stored on a computer system; a requestor that requests at least one shareable asset via a computer network; a policy fabric executing as computer code on a computation device that (1) assigns static and dynamic ownership rights to shareable assets; (2) contains rules, encoded as logic suitable for execution by a software process executing on a computational device, contributed by one or more owners which express the intent of each owner relative to the disposition of the underlying shared asset with respect to attributes of shareable assets, attributes of requests and requestors, and contextual reference information as derived computationally through network requests, computationally derived and stored digital content; and (3) applies the applicable rules when a requestor requests access to a shareable asset with protections for potentially conflicting interests of multiple owners; and a network message containing only approved digital content representing raw or filtered data or computationally generated derivates.

### BRIEF DESCRIPTION OF THE DRAWINGS

FIGS. 1A-1C show area conceptual diagram of the system components.
FIG. 2 is a flowchart of an embodiment showing a method for handling data owned by multiple parties.
FIG. 3 is a flowchart of an embodiment showing a method for fulfilling multi-party sharing of data owned by multiple parties.
FIG. 4 is a flowchart of an embodiment showing a method for limiting visibility of sensitive data in multi-party sharing of data.
FIG. 5 is a flowchart of an embodiment showing a method for deriving dynamic ownership attributions using contextual cues.
FIG. 6 is a flowchart of an embodiment showing a method for resolving potentially conflicting intents when sharing data in a multi-owner situation.
FIG. 7 is a flowchart of an embodiment showing a method for storing unrelated data in a multi-tenant system.
FIG. 8 is a flowchart of an embodiment showing a method for combining both raw data and derived Views in a multi-owner situation for multi-party sharing.
FIG. 9 is a flowchart of an embodiment showing a method for offering aggregated data in a data marketplace.
FIG. 10 is a flowchart of an embodiment showing a method for capturing multi-party terms and conditions in a Microcontract.
FIG. 11 is a flowchart of an embodiment showing a method for enforcing terms and conditions over time in a Microcontract.

### DETAILED DESCRIPTION OF THE EMBODIMENTS

The method and system includes a computer system implementation of a policy fabric and sharing system that combines computer data storage, computer processing, and computer networking components. The system grants or denies network access to stored digital data and digitally representable assets using a computer process capable of interpreting human contributed, computer executable rules along with context provided by computational derived, network accessible, or locally stored data to mimic human decision making. This creates a computational system which allows a both a single device or cluster of devices to provide centralized storage, computer processing, and network bandwidth needed to fulfill the data ingestion and digestion for an ecosystem of network-connected computer systems with diverse rights and interests in the underlying digital data. The system governs the contribution, access, and marketing of large amounts of shareable information in multi-tenant, multi-party transactions.

The system contributes to improved network performance by limiting bandwidth requirements, which also contributes to improving computing device performance through the use of fewer computational resources. Bothe of these further use less energy than traditional data sharing techniques.

The system also may include a software-defined data store described in more detail below.

The system may:
- create a flexible but consistent means to classify assets;
- separate the location and technology of storage from the attributes necessary to classify the assets;
- provide a flexible mechanism to rapidly deploy integrated connections between collaborative parties without the need for fixed integrations or traditional legal agreements; and
- allow asset owners to reflect their intentions for protecting and sharing their assets using a concise, electronic language that can be automatically evaluated at speeds necessary to make new connections and temporary contracts during the lifecycle of a data query.

### INTRODUCTORY SYSTEM COMPONENT DEFINITIONS

- A Contextual Condition may be an element of environmental data that can be severally or jointly evaluated in both current and historical form.
- A Contextual Cue may be data that reflects an asserted fact about the environment that may be factored into the derivation of a Contextual Condition.
- Data Quality rating is a system derived attribute that captures several dimensions of reliability of the publishing authority that may include:
   - - Confirmation of organizational attribution
   - - Status of login
   - - Use of known/approved apps
   - - Past history of use
   - - User ratings
- Domain-specific or Custom Conditional Cues may be defined to set new units of context for specific use-cases.
- An Exhaustive Audit is a digital record that captures the composition of each Microshare with details that include Request Attributes, Contextual Cues, evaluated Rule contents, source of Rulesets considered, Microcontract terms and conditions, and Operations Grants.
- Home Storage is the intended master data store for Source Content. Home Storage may be on-cloud, on premise, distributed in-whole or in-part, kept on offline media or otherwise persisted.
- Index Objects may be collections of Ownership Attributes that are kept separate from the Source Content used where direct annotation of the Source Content is impossible or undesirable. Index Objects turn normal data/documents/digital process into a Shareable asset by creating an annotated, virtual pointer to the content which aggregates a configurable set of Contextual Cues for efficient evaluation of Contextual Conditions.
- A Microcontract may be a specific collection of mutual terms and conditions that govern the performance of Operations on Shareables as expressed in a set of Rules. Microcontracts may involve exchange of payment or other value exchange as a condition of fulfillment.
- A Microshare may be the inclusion (or exclusion) of a number of Shareables from one or many Owners aggregated together as the result of the creation or existence of Microcontracts into a single unified result set upon which Operations may be performed.
- A Microshare may be conveyed as data (encrypted or unencrypted), displayed in a graphic user interface, provided as a response to an API call in real-time, provisioned as a downloadable file for batch purposes, rendered into hardcopy through printing or any other means of information transmission.
- An Operation may be an action that can be carried out against a Shareable typically but not limited to Read, Write (Create or Update), Delete, Query/Search, Execute, and Copy.
- An Operation may be an action that can be carried out against a Shareable typically but not limited to Buy, Sell, Rent, Open, Close, Lock, Unlock, TurnOn, and TurnOff.
- An Owner of a Shareable may be an entity empowered to specify rules that may be applied to a single or set of Shareables. Primary Ownership is usually conferred through the act of origination or creation of a Shareable. Secondary Ownerships are often derived by the context, both internal and external to the Shareable. Either condition may change with changing conditions.
- An Operation Grant may be an allowed Operation issued to a Requestor in response to a Request.
- Ownership Attribute may be a Contextual Cue that can be ascribed to a single or set of Shareables used to define Ownership on the basis of Contextual Condition evaluations.
- Ownership Attributes include (but are not limited to):
   - - Creator's User identifier (often email address)
   - - Organization unit represented by dot delimited reverse DNS format which includes top level domain, some number of hierarchical subgroups, and some number of user roles. E.g. com.comcast, com.comcast.cable, com.comcast.cable.admin.
   - - Unique identifier (appid or apikey) of the App or API originator used during the authorization of the creation.
   - - Location information captured as latitude/longitude, postal code, mailing address or similar
   - - Time of creation, update
   - - Demographic Attributes of the SUBJECT of the Source Content whether a person, device, legal entity, physical object, physical location, or other ascribable entity.
   - - Demographic Attributes of the REPORTING Entity of the Source Content whether a person, device, legal entity, physical object, physical location, or other ascribable entity.
   - - Ownership Designation tagging the type of ownership that is described using an arbitrary label used to attribute specific rights and to resolve future conflicts (see Multi-Owner Shareable). E.g. PRIMARY, BY, ABOUT, BUYER, ORIGINATOR
- Multi-Party Shareable is a Shareable upon which one or more Rules have been defined to create Operation Grants to third-party Requestors (non-owners).
- Ownership Indexes may create a searchable index of Ownership Attributes associated to Shareables. Index Objects can be said to be:
   - - Local if decorating the Shareable object itself,
   - - Remote if the Shareable stored in the original form elsewhere but the index object is Local, and
   - - Hybrid if the Shareable stored in the original form elsewhere but the index object decorated with additional Conditional Cues to improve searchability is Local.
- Ownership Indexes may be stored centrally and/or distributed to leaf nodes in a distributed network architecture.
- Request Attribute may be a Contextual Cue that can be ascribed to a Request to set context for Contextual Condition evaluations.
- Request Attributes related to Request/Requestor may include (but are not limited to):
   - - Requestor's User identifier (often email address)
   - - Requestor's organization unit represented by dot delimited reverse DNS format which includes top level domain, some number of hierarchical subgroups, and some number of user roles. E.g. com.comcast, com.comcast.cable, com.comcast.cable.admin
   - - Unique identifier (appid or apikey) of the App or API making the Request.
   - - Location of the Requestor captured as latitude/longitude, postal code, mailing address or similar
   - - Time of request
   - - Operation requested
   - - Authentication source and strength
   - - Validated emergency state, which is an additional set of Contextual Conditions which triggers upon detection of an emergency or exception situations. These conditions are often subject to conditional granting that require some form of human confirmation depending on the Rule and Sensitivity of the Shareable. These Attributes may be marked with the Request or be recognized as a precondition to the Request.
- Multi-Owner Shareable is a Shareable with more than one set of Owner Attributes that must be considered.
- A Request may be an expressed desire to perform an Operation against one or more Shareables.
- A Requestor may be an entity expressing the intent to operate against one or more Shareables by performing a Request.
- A Rule may be a codification of Contextual Conditions that capture an Owner's intent relative to Operation Grants to be allowed upon a Shareable asset in context of a specific Request and Requestor.
- Sensitivity Category may be manual set or automatically derived either at time of creation or as a latter matter of analytics based on common Digital Loss Prevention (DLP) conventions that search for contents such as credit card numbers, SSNs, or other sensitive/controlled/regulated information. Sensitivity Categories may be defined in any way with an unlimited number of classifications as dictated by the needs of the owner. Minimally captured as:
   - - Red - highest sensitivity
   - - Yellow - middle sensitivity
   - - Green - low sensitivity
- A Software-defined Datastore may be a virtual database view that behaves as a single, private collection of data provided to a Requestor (data consumer) in a point in time as the result of the automatic aggregation of Microshares.
- A Shareable is Source Content that may be annotated as being owned and can be considered a Shareable asset whether the asset is shared or kept private and whether the asset is purely digital or a digital representation of a physical object.
- Source Content is a single datum or group of data, documents, processes or other digitally represented assets including physical objects that can be digital tracked and may be contributed by systems or platforms, created by a publisher of such datum.
- A View may allow for the redaction of some or all the information contained in a Shareable that can be used to further filter content to limit the scope of an Operation Grant (usually an idempotent Operation).

### POLICY FABRIC

The Policy Fabric may be the system of:
- attributing Ownership Attributes to Shareables (one or more set is possible as with Multi-Owner Shareables; examples may include privacy and security attributes),
- storing Shareables with Ownership Attributes as either embedded data or as a separate Index Object with routing of Source Content to its home location,
- recording Rules to codify an Owner's intent,
- acceptance of Requests decorated with Request Attributes,
- algorithmic selection of Rules based on the evaluation of Contextual Conditions against Ownership Attributes that relate to Ownership properties of known Shareables,
- algorithmic application of selected Rules that determine Operation Grants based on the evaluation of Contextual Conditions against Request Attributes that relate to the Request and/or Requestor to create a Microshare,
- algorithmic and human-mediated means to manage the resolution of conflicting intents in multi-owner conditions.
   - - compensating actions for conflicts for destructive grants (eg. Update, Delete) may be resolved by either cloning or approval requests workflows,
- compensating actions for third-party sharing may be resolved through creation of anonymizing Views or approval request workflows.

The Policy Fabric may respond to the introduction of a new Shareable by:
- attributing Ownership Attributes to the Shareable,
- storing the Shareable object annotated with Ownership Attributes in a one or more schema-less data stores, or
- storing the Ownership Attributes and an optional subset of additional Contextual Cues into an Index Object in a schema-less data store and routing the storage command to the Home Storage based on the conditions setup by the Owner of the Source Content.

The Policy Fabric may fulfill incoming Requests with a set of Shareables by:
- determining the group of candidate Shareables based on Contextual Cues contained in the Request,
- collecting a group of candidate Rules based on the Ownership Attributes of the candidate Shareables,
- for each group of candidate Shareables that possess the same Ownership Attributes, determining the set of Rules which govern Operation Grants based on Ownership and Contextual Conditions,
- evaluating the Contextual Conditions contained in the applicable Rules by factoring Contextual Cues against the algorithms described in each Rule to determine a grant of an Operation,
- creating an Audit record capturing the Microcontact creation (Rule with relevant Conditional Conditions and Conditional Cues),
- exercising the resulting Microshare by carrying out the Operation Grant activity in accordance with the Microcontract, and
- triggering follow-on activities resulting from the Microshare execution or Microcontract creation such as but not limited to payment exchange or human notification.

The Policy Fabric may be a distributed software system coded in the Scala programming language with both centralized processing on a core set of servers as well as decentralized processing on network leaf nodes which may be comprised on sensor devices, home network components, smart appliances, mobile devices, home or office computing devices, and/or distributed servers.

Any Turing complete programming language, including microcomputer assembly language, may be used to embody the Policy Fabric.

Alternative systems deployments that include self-contained software modules, hardware-based and/or micro-coded logic intended for general purpose or special purpose microprocessors.

The Policy Fabric may use JSON-based messages and RESTful API calls to create new Shareables, make Requests, and fulfill Microshares.

Alternative means of integration with the Policy Fabric such as Software Development Kit (SDK) libraries, XML, SOAP or alternative Web Services & RPC-like integration protocol.

### SHAREABLES

Shareables and their Ownership Indexes may be created through invocation of real-time APIs or through batch processes of Source Content.

Shareables may be digital assets such as loT sensor datum, files, audit records, transaction records, images, videos, or any physical asset whose ownership can be represented through Ownership Attributes in Ownership Indexes with physical inventory control such as RFID or loT sensors to track and monitor disposition in real-world.

### RULES

A set of default Rules may be established to apply to any Shareable without specific rules established by the Owner of the Shareable. Shareables may thus be protected by a set of unalterable Rules.
- A TRUE grant state may be the expression of a Rule that allows a Requestor to execute an Operation Grant against a Shareable through a Microshare.
- A FALSE grant state may be the expression of a Rules that denies a Requestor to execute an Operation Grant against a Shareable through a Microshare.
- A MAYBE grant state is the expression outcome of a Rule that seeks additional processing through the collection of additional Contextual Cues or the firing of subsequent Contextual Conditions.

In evaluating applicable Rules against a Request there are two stances: LOOSE (default) stance and STRICT (optional):
- LOOSE - By default, any Rule (except the Default rule in the event that other Rules are found to be applicable) determined to be applicable may result in a TRUE grant state for the Microshare.
- STRICT - It is optionally configurable to require that ALL applicable rules return a TRUE grant state prior to performing the requested Operation.

In the event of multiple TRUE grant states for a given Request, a Weighting Algorithm may be used to determine the most applicable of the given Rules for the purposes of generating accurate Audit and triggering the creation of Microcontracts which may convey Payment Events. One dimension that may be used in the selection of a TRUE are the terms and conditions specified by the resulting Microcontract such as the length of time granted or the relative price set by the Owner of the triggered Rule.

To narrow the set of applicable Rules in a large field of potential Rule candidates, the following criteria may be used in a first pass:
- Shareable Type
- Record Type (describes the domain of the underlying datum) (see also "like" types)
- Operation grant
- License terms describes the legal rights conveyed through the granting of the Rule to a Requestor. These rights may be textual or encoded for automatic enforcement.

The naming standard for Record Types may create a "Dewey Decimal" system for marking a Shareable as belonging to a given domain of data by industry, function, and systemic relationship.

"Like" types are alternative indexes of Shareables that have been determined to bear strong relationships to the target Record Type based on elements such as the frequency of their association in usages, similarity of underlying structure, and designation by a trusted source.

"Like"-types may be used to allow for the discovery of new Shareable sources in the course of a Request consummation. "Like"-type Rules are typically limited to idempotent (non-persisting) Operation matches (e.g. Read or Query).

Rules that relate to a specific domain, record type, or other bundle of Ownership Attributes may be grouped into a Ruleset. Rulesets may be cached inside the runtime system to improve the performance against larger numbers of similar Shareables.

Rulesets may also be authored centrally and distributed automatically to execute closer to either the source of the Shareables or the target of consumption to offload processing and improve the speed of execution. Rulesets will be specifically encrypted in-storage and will include a "digital fingerprint" using a hash algorithm, such as SHA-256, to prove that the Ruleset has not been tampered with.

Rulesets may be stored as data, as executable software code, or both.

In a STRICT implementation, Rules may be set to block information sharing between parties where Rules define Contextual Conditions such as those required in the Gramm-Leach-Bliley Act which prevents the sharing of certain customer information between lines of business in financial institutions.

The Shareable content itself may be stored in an encrypted format to prevent unintended disclosures. Shareables may be cloned using different disposable private keys to allow for controlled views across multiple parties without the loss of the Owner's master private key.

### MICROCONTRACTS

Microcontracts may be rendered into a smart contract enforcement system such as the blockchain-based Ethereum using a Turing complete scripting language, such as Solidity, to encode specific executable Rulesets. The creation of a smart contract enforces that the terms of the contract will be honored by the Owner to the Requestor because it ensures that the contracted Rules cannot be revoked by the Owner until their terms are met. Microcontracts rendered in this way may preserve a Ruleset and the implied Operation Grant rights until terms and conditions have been met such as expiration of specified time period, number of invocations, or payment status.

Rulesets preserved in public blockchain implementations may be 'locked' using encryption keys to ensure party-to-party privacy.

The publication of rulesets to blockchain smart contracts provides the potential for third-parties to audit the information shared between parties. This provides an indelible audit record of information exchange necessary in certain regulated industries such as Gramm-Leach-Bliley Act compliance in financial institutions.

### DESCRIPTION

The system herein helps manage the volume of information that must be consumed, categorized, and consummated and makes that data immediately available to an end user like a business to generate value from the information while respecting the rights of multiple owners of the data or stake-holding parties.

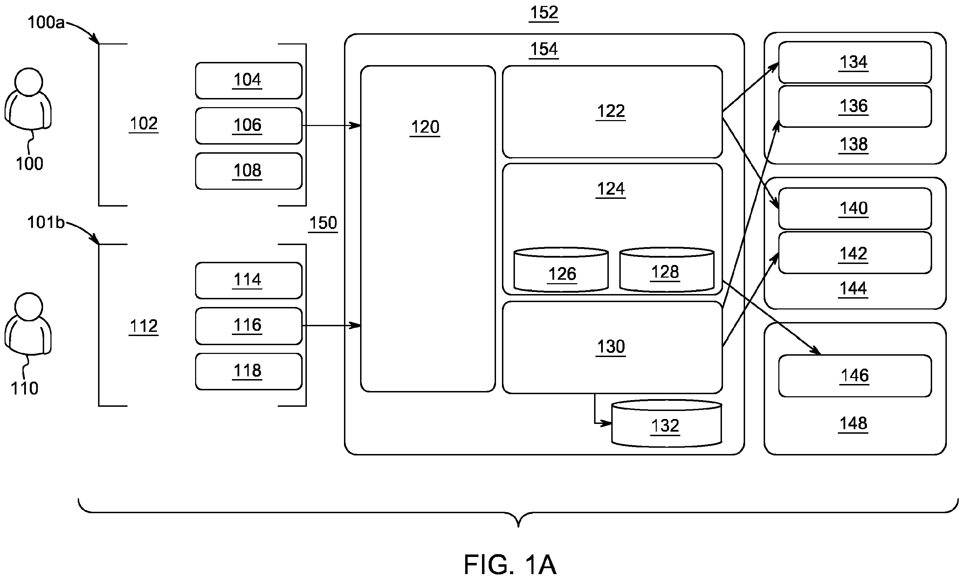

As shown in FIG. 1A, Data Owners 100 include data contributors such as loT networked devices 100a that may include data sensors, mobile devices, operational systems 100b, and transactional systems 100c. Data may be consumed by Requestors 101 through multiple device actuators 101a, analytics pipelines 101b, and applications 101c. Both sets of users 100 and 101 may interact with the system architecture 120 through either a graphical user interface or through system APIs 110 mediated by an API Manager 102. The API Manager interfaces with the Authorization Manager 103 to determine the identity of Owners 100 and Requestors 101 based on supplied credentials. Identities may be managed through a combination of local and external identity management systems existing either in an Enterprise 107 or in the cloud 108.

The Policy Fabric 104, which evaluates user-defined policy Rules to manage the sharing of data right, mediates requests to store or retrieve data. Data is logically managed by a Virtual Data Lake 105 that abstracts the details of local 106, remote enterprise 107, and remote cloud 108 data storage configurations. It may also use a distributed database such as a blockchain 109 to store indelible Rulesets in the form of Microcontracts. Data may flow from multiple Owners 100 to multiple Requestors 101 through the core architecture that ensures that proper governance is observed.

Each data element may have unique ownership rights that may be managed to ensure regulatory compliance, satisfy contractual obligations, or capture value from downstream applications of the data. When data that has multiple owners, it is said to be multi-owner. When data has multiple (non-owner) consumers, it is said to be multi-party. The system manages data in the context of both multi-owner and multi-party contexts simultaneously.

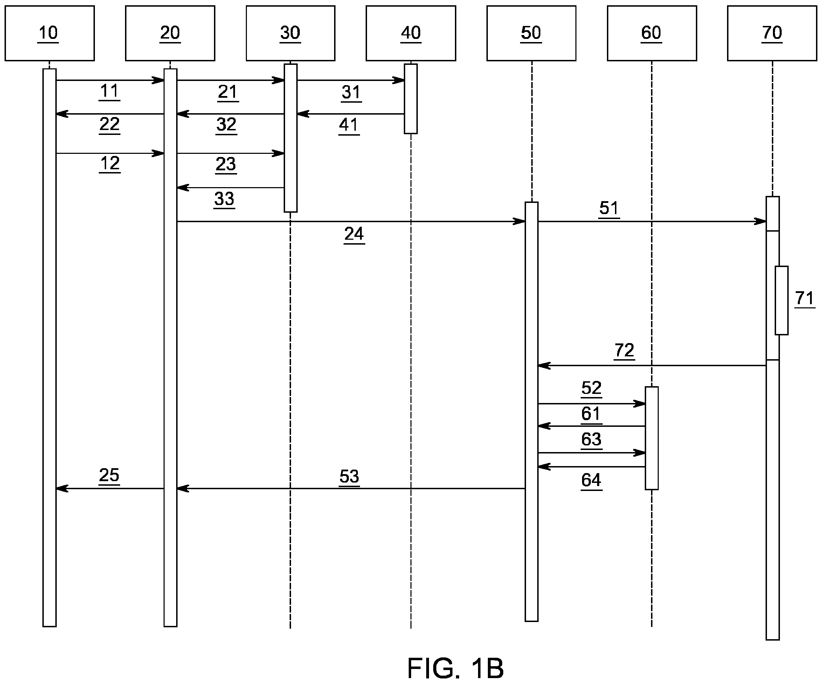

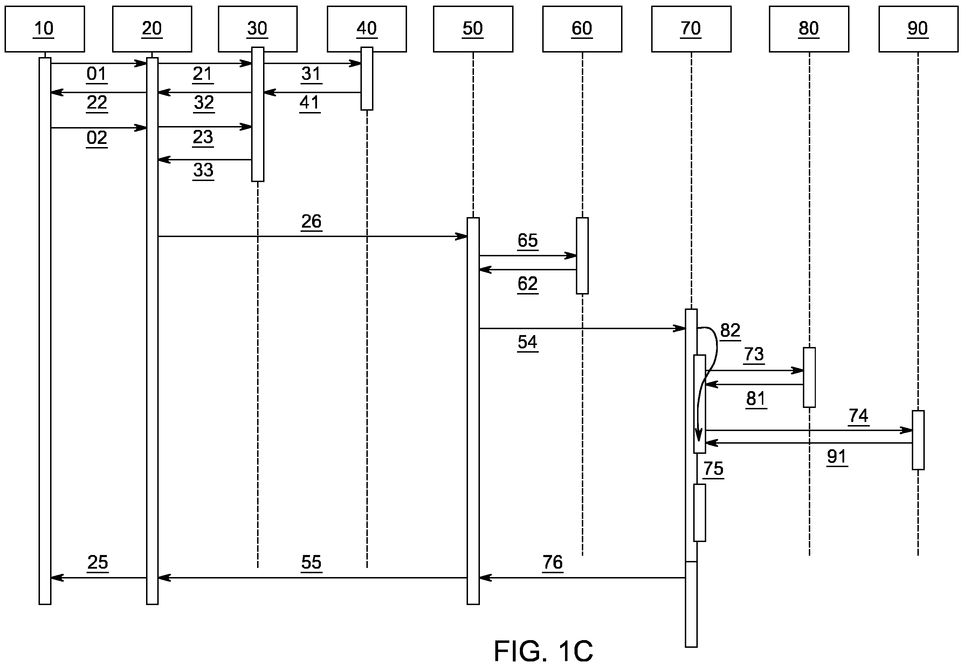

Each system component may represent a collection of one or more computer storage, processing, and network resources dedicated to a function of the system. Two example interaction diagrams are provided to show common interaction signals between components for scenarios where 1) FIG. 1B new datum is stored and indexed in the system and 2) FIG. 1C data is requested by a third-party via networked computer.

FIG. 1B begins with the originating (or Owner) system 10 represented by a sensor, transactional computer system, mobile phone, or other digital data generating device sending an Authorization API request 11 to the system. This Authorization API request 11 includes some verifiable credentials which may include username/password, cryptographic key exchange, or biometric parameters that can be used to positively identify the end user or system. The request 11 is handled by the API Manager component 20. The API Manager passes the credential authentication signal 21 to the Authorization Manager 30, which will determine if the asserted identity belongs to a foreign organization or a local individual. Based on the determination, the Authorization Manager 30 will either make a request 31 via network-enabled API to a remote Identity Manager 40 or invoke a local computer process representing a local Identity Manager 40. The Identity Manager 40 will lookup the asserted user in the user storage and determine if the supplied credentials confirm that identity. If the identity is confirmed (ie. The supplied password matches that stored for the asserted username.), then the Identity Manager 40 will return 41 all of the stored attributes of the confirmed user. The Authorization Manager 30 will then generate and transmit a unique token 32 representing that session through the API Manager 20 and through another signal 22 to the Owner 10. The token may be set to expire in some finite amount of time. The Authorization Manager 30 persists to disk storage or maintain an in-memory lookup structure to retain the linkage between the user information and the authorization token.

FIG. 1B continues with the originating system 10 making one or more network API calls to POST 12 or create new data entries into the system. The API Manager 20 confirms that the supplied token is still valid and retrieves stored Owner Attributes from the Authorization Manager 30 in authentication 23 and owner attribute return 33 steps. The API Manager 20 then sends a message containing the data to be stored (source content) and the Owner Attributes 24 to the Virtual Data Lake 50. The Virtual Data Lake 50 sends a message via network or in-process communication 51 to the Policy Fabric component 70. The Policy Fabric component 70 applies logic (attribution function) 71 to the packaged request to determine an array of Owners based on the Rules established by the primary Owner. The array of Owner Attributes with 1 or more Owner data structures is returned by message 72 to the Virtual Data Lake. The Virtual Data Lake 70 will then cause to be stored the source content and the Index Object by calling one or more Data Storage components 60. The Data Storage component 60 exchanges object save 52 and save response 61 signals with the Virtual Data Lake 50 and is responsible for the durable maintenance of the digital information on disk, in-memory, or similar digital media. On successful storage, the Virtual Data Lake 50 will send an acknowledgement message back to the API Manager 20. The API Manager 20 will respond to the POST API call via a network message 25 to the originating system 10.

FIG. 1C begins when a Requestor 00 operating a computing system capable of consuming digital data makes an Authorization request 01 which is handled in the system as described above, where like numbers represent like signals and logic responses. The Identity Manager used in this exchange may or may not be the same as used to identify and describe the original creator. It is assumed that Identities are managed by many participating organizations each operating a computer system component capable of authenticating and authorizing their own end users and systems. Each Owner/Requestor may be authenticated by their own unique organizational associations.

FIG. 1C continues when the requesting system sends a network-enable API request message to the API Manager to GET, query or retrieve some set of data 02 based on some combination of unique identifiers (foreign keys), query parameters, search tags, keywords, or data classifications. The API Manager 20 formats these parameters into a Shareable Query and sends a message 25 to the Virtual Data Lake 50 for fulfillment. The Virtual Data Lake 50 executes a query 53 against stored Index Objects using the Data Storage component 60. The Data Storage component 60 returns a collection of zero to many candidate data elements 62. This set of candidates is sent as a stream or aggregate data structure 54 to the Policy Fabric 70. The Policy Fabric 70 first uses the unique set of Ownership Attributes from each of the elements in the candidate list to query 73 a Rule Storage component 80 that represents a persistent data storage technology and may or may not be the same as the Data Storage component 60. The candidate rules are returned 81 to the Policy Fabric 70. The Policy Fabric 70 will make a query 74 to any associated distributed data stores (such as a blockchain provider) 90 to determine if there are associated Smart Contracts (Microcontracts) relating to the candidate elements and the data store 90 returns candidate Rules 91.

The Policy Fabric 70 will aggregate the Rules from both sources 80, 90 and call the evaluation function 75 to determine where each element in the candidate list is granted based on the Rules and the context established by the Policy Fabric 70. The result is a filtered list of elements that comply with all of the applicable Rules. This filtered collection is sent as a stream or aggregate data structure 76 via computer message to the Virtual Data Lake 50. The Virtual Data Lake 50 will annotate the collection to create a Microshare and return this data structure 55 to the API Manager 20. The API Manager returns the Microshare content in a digital format that complies with the request (typically as JSON, XML, or some compressed or encrypted binary format) via network message 25.

### - EXAMPLES

### - - RECORD ENTRY INTO ELECTRONIC MEDICAL RECORD

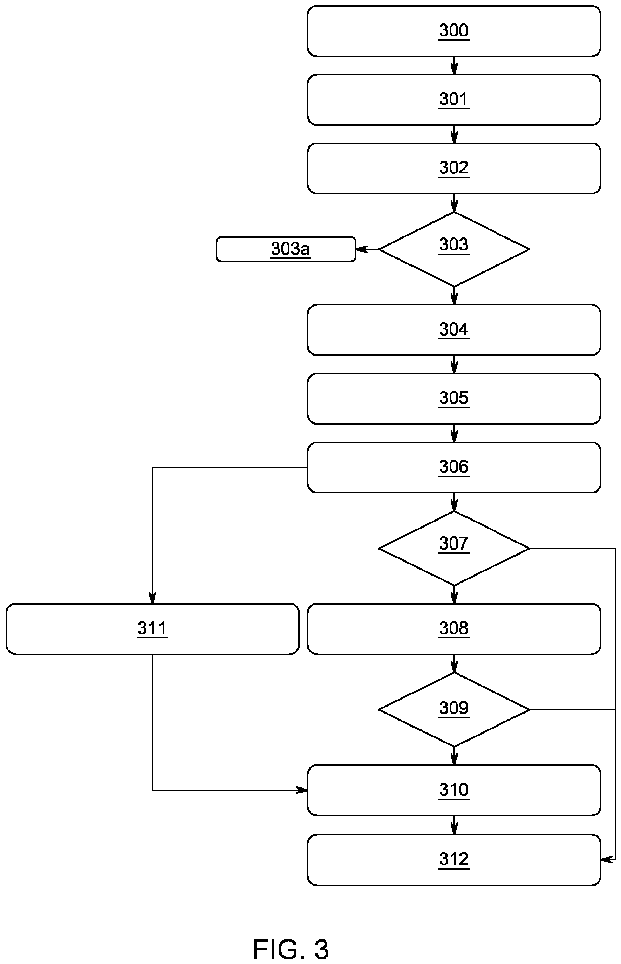

An example in the realm of healthcare (FIG. 3) involves an entry into an Electronic Medical Record (EMR). In such a system, a Physician enters notes into an EMR User Interface 200, and the EMR authenticates to the system using an API to establish the Physician's identity 201. The authentication may be based on credentials which may include some combination of username and password; private security keys; certificates; or biometric markers. In this example, the Physician provides username and password to their EMR system whose underlying identity management is performed using an Active Directory repository. The system may receive a request via API executed by the EMR system to authorize the Requestor for system access. The system may reflect the provided attributes back to the Active Directory identity management system and use the resulting data to ascribe attributes (Requestor Attributes) to the Physician as a Requestor and potential Owner. For the purposes of this example, the Ownership Attributes may capture the Role (physician), authentication strength, and identifying organization (medical company). Once authenticated, the system may receive data from the EMR 202. The description of the process of authentication leading to Requestor Attributes or Ownership Attributes will be omitted from subsequent examples since it is repetitive.

The entry may be contributed BY 203 the physician, creating a Shareable 204, stored according to a configured logic 205. The entry may be ABOUT 206 the patient. The system may assign BY and ABOUT as Ownership Designations based on these relationships and stores them in an Index Object 207 for later use. By regulation and logic, this single record is "owned" by both the physician and the patient-the BY and the ABOUT parties. Each has rights of access and disposition of the data. The patient, however, has no ownership claim to every record stored in the same EMR repository. Thus stored, each notional row has a potentially different ABOUT owner. The EMR record, in this case, is said to be multi-owner.

The system attributes data, process, and document ownership in a multi-owner way by annotating or indexing each individual data asset (notionally each row). Annotations may be added or tagged to any kind of data from documents to sensor readings. Annotations allow assets to be tracked and managed across cloud and on premise storage locations and technologies giving a one-source-of-truth view of co-owned content.

Annotations may include:
- Organizational affiliation,
- App/Sensor origin,
- Name of originating entity, name of data subject,
- Location of generation,
- Time of generation, and
- Customizable tags.

To follow the example, the EMR entry may be annotated with information that describes both the BY owner and the ABOUT owner. This information might be stored with the EMR entry or in a completely separate index database.

The system allows every owner the ability to capture their intent or policy regarding the disposition of the shareable asset by any third-party Requestor (typically a non-owner). This disposition is usually described as an act of sharing (ie. Reading or Querying) but includes any logical operation (Operational Grant) on either the data itself (eg. READ, WRITE, DELETE), a digitally mediated transaction (eg. BUY, SELL, RENT), and the digitally represented physical asset (eg. UNLOCK, OPEN, SHUTOFF). Intent is captured in the form of a number of Rules-an computer executable language or interpretable instruction set-that express the intent to grant operations based on attributes of the data, attributes of the request, and on attributes of the general environment.

To continue the example, a patient may create a Rule that grants Read-only access to their medical records 300 (those that are ABOUT them) created by any medical professional (written BY any owner) to any verified employee of their own Primary Care Physician. This Rule will typically convey to the PCP rights to read without changing ownership. The patient could create another Rule that extends access, contextually, to any other physician if the patient is currently located inside of that physician's hospital 301 (based on reported location of a mobile phone or other location-sensing device 308, 309). When a Requestor sends a request for medical data relating to the patient 302, the system may find all the candidate Shareables 304 and candidate Rules 305 and evaluates them in the context of current Request 306. The second Rule 301 would allow for fast data sharing in the event of an treatment event or emergency. To determine if the Rule applies in a given context, the system may determine a) if the current Requestor has a role of Physician 307 by looking at the Request Attributes and then b) if a Contextual Cue exists that signals that the patient is currently located within the confines of a hospital 307, 308. If these conditions apply then the data is accumulated into a Microshare 310 and returned to the hospital's patient system for review by medical staff 312. The response to the Requestor (medical staff) 312 may limited to only the resulting Microshare contents 310 which is guaranteed to contain only data allowed by the Rules. The EMR record, in this case, is said to also be multi-party because rights have been provisionally granted to non-owners.

The system may grant contextual access with fluid rules to make it easy to mash-up insights from multiple sources dynamically. Aggregations, redactions, and other data operations (Views) are captured in the system by Owners in such a way that Rules may be applied to them independently of the data upon which they act. The system applies to any mechanism for creating predefined queries or views without respect to the language used to define them or the underlying technology used to enact them.

### - - HOME OWNER

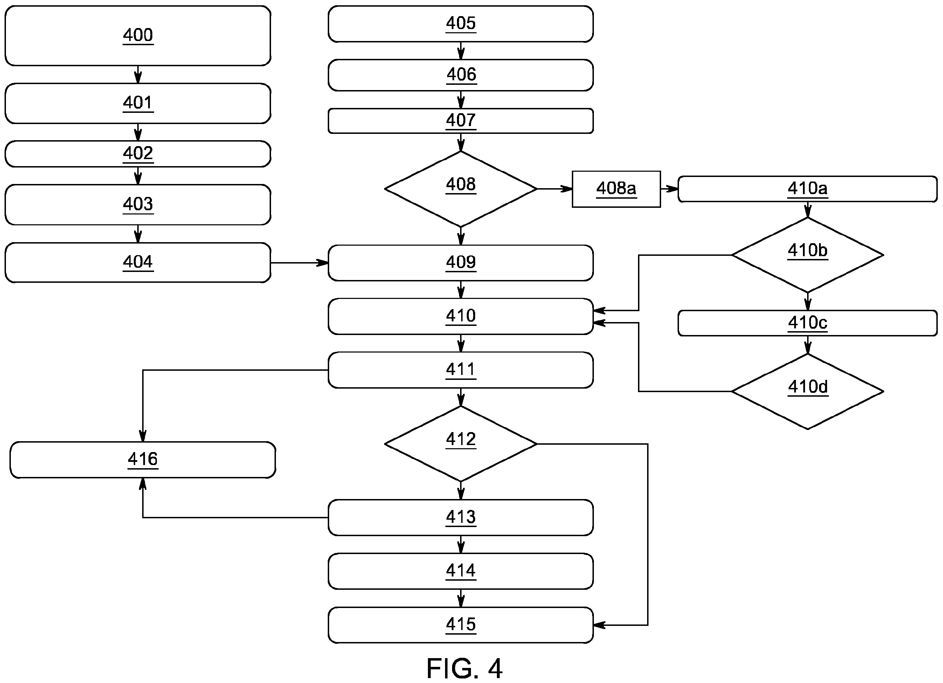

For example as shown in FIG. 4, a Home Owner may wish to share home security usage metrics (utility consumption, time spent in the home, for example) with their home insurer in exchange for a discount. The Smart Home systems send data streams 400 to the system, which allocates ownership to the home owner 401, creates a Shareable 402, and stores both the sensor data 403 and the Index Objects 404 that describe the Shareable in terms of searchable metadata. To protect potentially sensitive information represented by the raw data collected from the home security system, the Home Owner creates a View that calculates the average daily activation time for the security devices 405.

The Home Owner may create a Rule to grant EXECUTE rights to that View for an authenticated employee of an insurance company, for example, with a role of Underwriter 406. Notice that the Home Owner does not assign the insurance company a role as a co-owner but only grants provisional access rights which may be revoked at any time.

License terms are conveyed to the insurance company Requestor creating a legal contract which may be used later to pursue damages based on misuse 414. The legal contract may be entered into as terms of requesting and granting the request. The Underwriter can make requests 407 to retrieve current usage data at any time. After the Request is received 407, the system may request authentication 408 and find Shareables related to the homeowner and security domain 409. The system retrieves stored Rules that apply to the Smart Home data 410 and includes both Rules that apply to underlying data 410a and 410c. In this example, the system may determine 411 that there are no Rules providing access to underlying data 410b so the response to the Underwriter 415 may be

dynamically assembled 413 414 to include the aggregation but not the underlying rows of data that are factored into it. In this example, the applicable Rules include a check against the Authenticated details of the Requestor to establish that the request is originating from an employee of AAACo with a role assignment of Underwriter 412. In so doing, the Home Owner shared the desired minimal insight required to fulfill their obligation to the Home Insurer without sacrificing privacy. For example, while the Home Owner may have shared at what times the home was occupied, it may not have shared information regarding how many people were at home, their ages, or their locations in the home, thus protecting certain aspects of their privacy. The entire process of evaluating Rules against criteria is captured in an Exhaustive Audit 416 to provide a detailed record of the transaction.

The system includes the Policy Fabric Rules Engine that ensures consistent application of the data ownership rules. Built with Multi-party Collaboration as the default environment, the Policy Fabric allows for negotiation and consummation of data sharing partnerships in microseconds. This is called a Microshare(s). With Microshares, users or user devices can both share and gain access to the shareable assets of others without the need for fixed integrations or protracted security configurations. Shareable assets may be on-cloud or on-premise: Both are protected by the Policy Fabric's security rules and enabled by Enterprise-friendly integration capabilities.

The annotation schema may be used to determine what data can be shared and what data must remain private by defining rules that fire against contextual data to determine how to handle requests for access. Rules serve as knobs and dials that can set a granular privacy stance. Rules bridge the gaps between exclusive (locked-down) and publicly owned assets (wide open).

As rules determine applicability, data may be made available by opening and closing virtual doors and windows rather than moving data. These virtual doors may be available to allow multi-source, sub-second analytics that can factor data on-cloud and on premise with complete security. Without the need to move the data, an Owner's information is rented and not sold because access can be limited in time or condition to make the most of your monetization opportunities.

The system makes Shareables useful by multiple parties by providing a network-enabled Application Programming Interface (API)-a single integration style for all types of data. The system provides a single, consistent API/SDK regardless of the format, technology, or source of the information. The single API allows the discovery of new data assets and the integrating of new insights without requiring elaborate integrations or slow provisioning. Relationships between data creators and data consumers can be fluid and governed by the Rules/Views established by owners and the parameters to the API Requests alone. System tools can even allow M2M processes to use automated discovery to find and incorporate information in robotic automation decisions without human intervention. Requestors and Owners may interact with the system through API, SDK, batch file import/export, or through graphical user interfaces.

### - USE CASES

### - - INDUSTRIAL IOT IN SUPPLY CHAIN WITH MULTIPLE STAKEHOLDERS

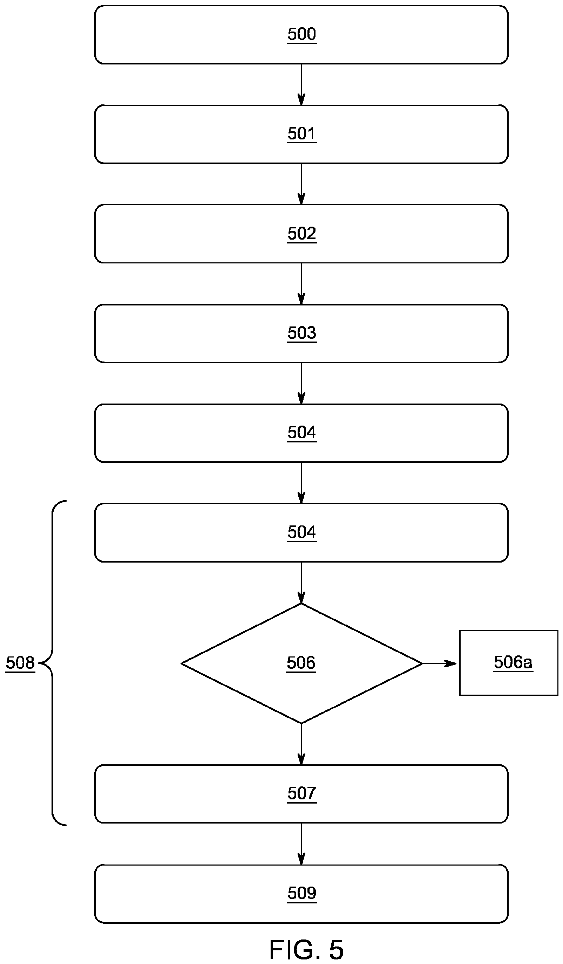

Consider a multi-purpose sensor installed by the manufacturer of a diesel engine (FIG. 5) for the primary purpose of monitoring the engine's warranty compliance. The sensor's data is forwarded by API to the system which receives it and begins the process of attribution and storage 500. In the supply chain, the engine may be purchased by the manufacturer of buses (among others) and is installed into a bus by which is sold to a leasing company. The leasing company leases the bus to a tour operator. That tour operator sells seats on that bus to consumers. The bus is driven through multiple jurisdictions with interest in the safety of citizens and apportionment of infrastructure costs. Each party to the bus's operation has a different stake in the information collected by the single engine warranty sensor.

With the system described herein, the engine manufacturer might be considered an originating owner 501. The embedded sensor(s) within the engine may channel the data to the system where it is noted as being owned by the engine manufacturer. The system Policy Fabric must first determine which engine the reporting sensor is installed in using a Contextual Cue provided by the engine manufacturer 504 which provides a lookup between sensor ID and engine ID. Additional owners may be attributed by walking through additional Conditional Cues such as the bills of sale 505 provided by the engine manufacturer to determine that the sensor was sold to the bus manufacturer 506. Upon such a determination, the bus manufacturer may be added to the index as a secondary owner 507. This process is repeated in a loop as successive relationships in the supply chain are discovered by the Policy Fabric 508. The sales data of the bus manufacturer may be used to determine that the leasing company is also an owner. The current lease data is accessed to determine which tour operator is also an owner of this data. The sensor data is now clearly multi-owner 509.

Each of these co-owners may set their own Rules which, in turn, grant access to appropriate section of data to third-party maintenance companies or asset insurers. In such a case, the sensor data is multi-party-being shared by owners with interested non-owners.

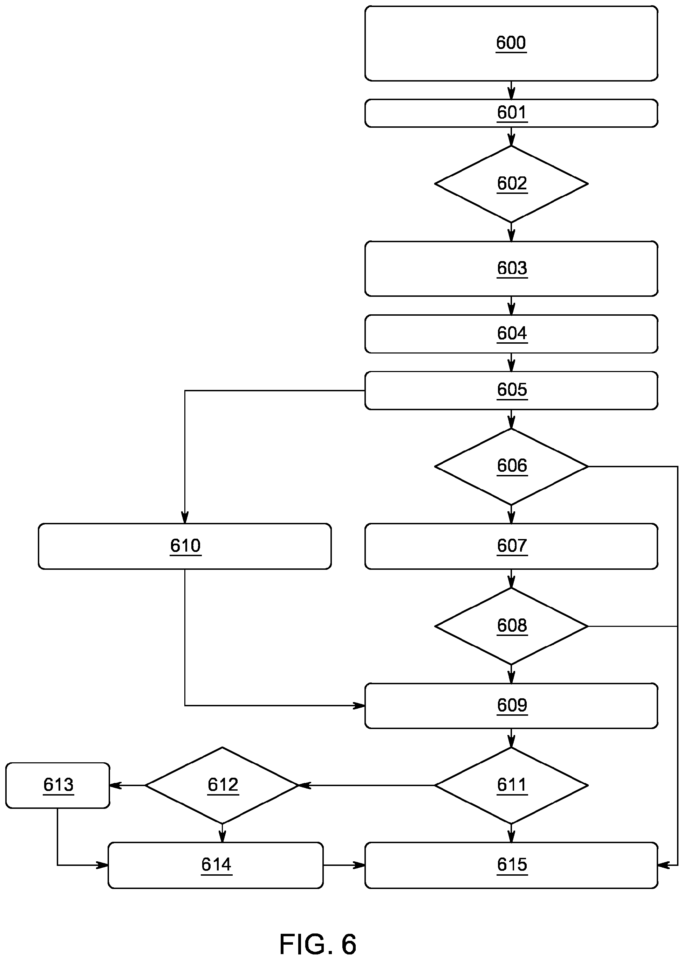

FIG. 6 shows further logic in this continuing scenario. Based on a global Rule put in-place by the bus operator, the operators of the municipal bus terminal in Anyport, USA may be able to Query the system to determine the location, direction, and maintenance history of any buses that are within 2 miles of the terminal location 600. The systems received the Query 601, checks for authorization 602, finds relevant Shareables 603 and identifies applicable rules 604.

The system evaluates 601 the Rules set by the operator (set in step 600) and begins an audit of each record/Rule combination considered 610. The audit record may contain an entry for each datum in combination with each applicable Rule and includes relevant Contextual Cue. The audit stream contains enough detail that the transactions can be recreated in retrospect. The auditing process 610 may be executing in-parallel to the evaluation steps 605 607 608 609. The evaluation involves checking if a requestor is a government employee 606, locating a Contextual Cue about a bus location 607, and checking a bus location proximate to the Requestor 608. From this, the system creates a collection of each datum whose Operational Grant was accepted by the Rules as filtered through the defined View to create a Microshare 609.

Prior to returning data to a government Requestor, the system will confirm that the Operational Grants contemplated do not violate the Rules established by other owners 611. If a conflict is found, the system may execute a remediation workflow to determine a satisfactory resolution. The system may attempt to automatically resolve the conflict 612 by applying logic provided by other owners. If an automated solution cannot be found, a human workflow will be triggered 613 which the system will manage to determine the disposition of the conflicting request. The final result may be a compensating action defined within the resolution workflow 614 which may result in a situational Grant or a denial of the Grant.

Naturally, the Rules may e applied in such a way that the leasing company is be able to make Requests to view the subset of the data that is generated only by their buses. In other contexts, data from engines installed in, say, farm equipment may be unavailable to this bus/transportation branch of the supply chain. Contextual Cues may be provided in the form of supporting operational data such as bills of sale and bills of lading. Likewise, the tour operator should be able to Request location and performance information for the buses that they operate and not those of their competitors. Consumers should be able to Request location information for the buses that they are waiting for.

### - - DIGITAL HOMES

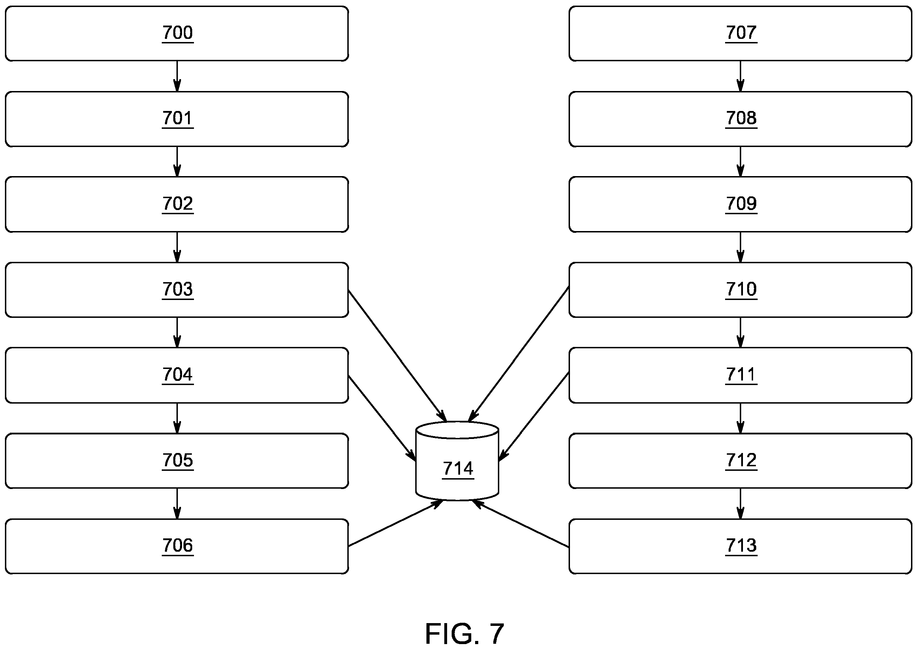

FIG. 7 shows another use case where a renter rents an apartment from a building owner that equipped the unit with a smart refrigerator. That renter buys a network-connected, clothes washing machine. The data from each of the connected devices may be shared directly to the individual manufacturers (as is often the case today) 701, 707. Assume that the renter may want to receive a discount from their electric company, but this discount requires energy usage statistics from all major appliances be made available in real-time. This sets up this use case.

Using the system, the manufacturers (A & B) are automatically marked as the primary owners 702, 708 for both the refrigerator and washing machine respectively when the data is received through the loT network. The system stores relevant Shareables according to the logic 703, 710. Based on warranty data 704, 711, the landlord is attributed as the second owner of all refrigerator/washing machine data 705, 712 in any of their buildings. Finally, the system stores Index Objects for each owner associated with the Shareable.

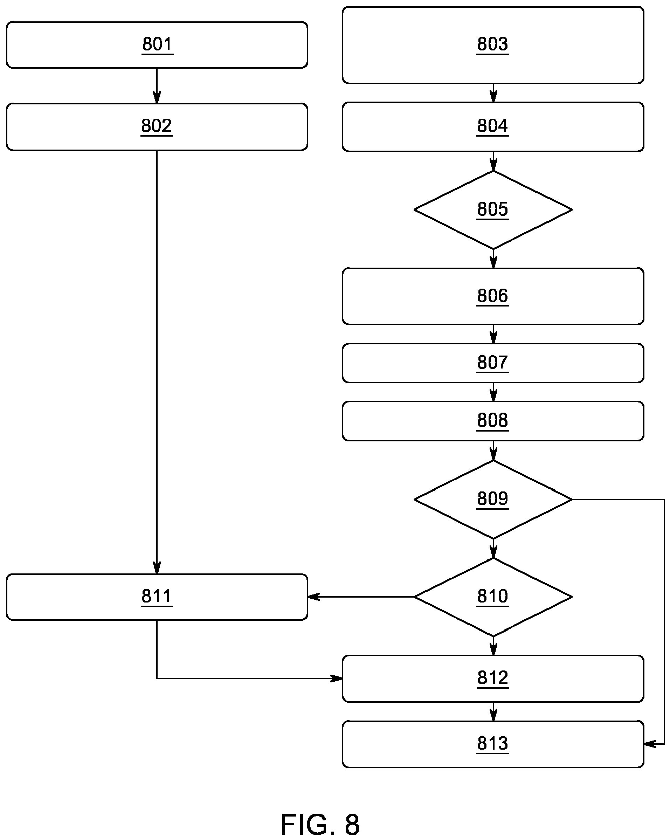

FIG. 8 continues this utility use case. The landlord may create a View that filters the refrigerator data to remove any data not associated with the requesting renter's apartment 801. The landlord may further create a Rule that grants EXECUTE access to the View for any of the renters 802. The renter can make a Rule that includes the electric consumption statistics from both machines and allocates a Rule that grants access to the electric company 803. The system considers the Request 804 in context of both the raw data from the washing machine (of which the renter is an owner) AND the View mediated data from the refrigerator (of which the renter is an allowed party) 806 (after confirming that the renter is authorized 805).

As in previous examples, the systems finds Shareables 810, identifies Rules 807, evaluates Rules 808, and confirms that Requestor is authorized (see first example for details) 809 and that the data is not someone else's 810. The system executes the View 811 using the authority of the View owner, in this case, the landlord. This creates a new data stream derived from underlying data that both the renter and the utility company are unable to see. The system combines the two types of data together to create a single Microshare 812.

As a condition of the lease, the Renter may also grant access to all of the underlying data to the landlord who uses it to manage noise disturbances predicted by machine vibration statistics. When the lease expires, the Rules granting the landlord access to the data from the washing machine and the renter access to the data from the refrigerator may also expire.

### - - DIGITAL DATA EXCHANGE FOR MULTIPLE REAL ESTATE HOLDINGS

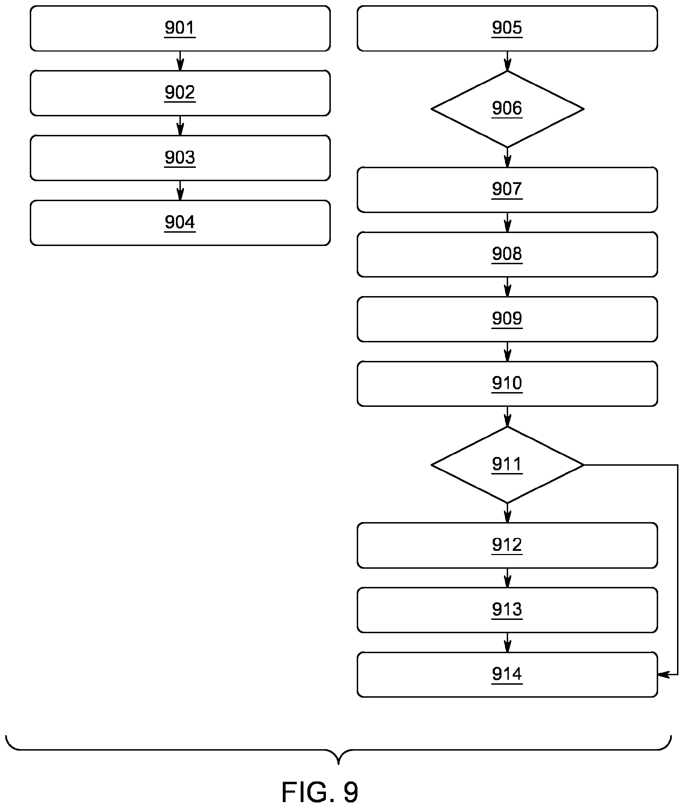

Consider an owner of many commercial real estate properties as shown in FIG. 9. The owner installs sensors to monitor energy usage and occupancy across all properties. The owner creates Shareables from relevant data streams related to these. As the information Owner, the commercial real estate owner may create additional revenue by selling the data to non-competitive businesses.

Using the system, the property owner imports the data 901 to create Shareables. The property owner defines an unlimited number of Views 902 to create anonymized, aggregated, or filtered derivatives from the underlying Shareables. Each View receives its own set of Rules to govern the share-ability with Requestors. In the event of a discovery process, an Owner may also create a set of sample-only Views 903 may be created with looser set of sharing Rules 904 than those defined for the complete Views. This may allow the Owner to share a limited sample set of the data allowing potential Requestors to evaluate the data for suitability. The Rules encapsulate additional terms and conditions that must be met before the Shareable can be accessed by a Requestor. The terms may outline the details of payment on a per building per month basis. The conditions may place restrictions on the Requestor such as a requirement to have a Dun and Bradstreet entry which does not be list the requesting organization as a commercial property owner.

Requestors make requests 905 and those that are authorized 906 and meet the criteria 907, 908, 909 may be shown a sample of the data as generated by the property owners sample View 903. Following the location of Contextual Cues 910, Requestor clearance 911, Microshare creation 912, the system responds 913. The response includes details of the Terms and Conditions which the a requestor may consider prior to fulfilling a transaction 914.

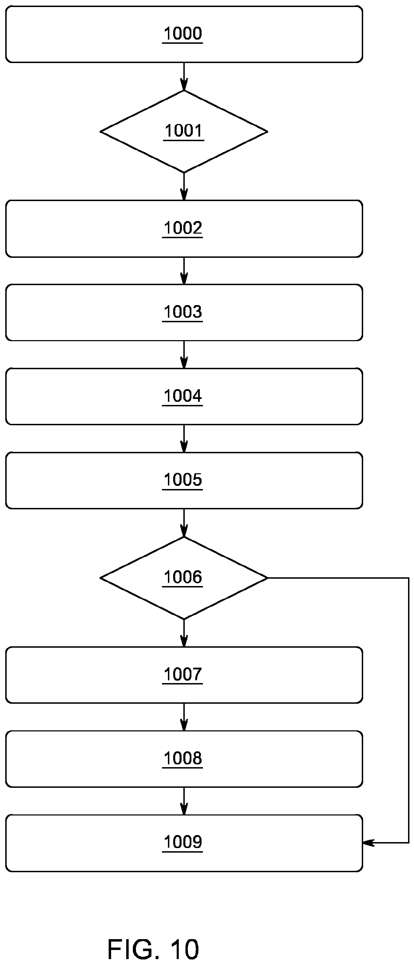

For the purposes of this example, a local utility company wishes to buy a year-long view of building information from 10 regional commercial property managers (including the property manager mentioned above) for the purposes of capacity planning across commercially zoned areas. If the utility company decides to enter into a Microcontract with the property owner, a new request may be issued 1000 as shown in FIG. 10. The Microcontract is intended to establish irrevocable access to the expected volume of sensor data for the agreed-upon price following these defined terms and conditions captured by the owner as Rules 910, 911. After verifying that the Requestor is authorized 1001, the system finds Shareables 1002 and to ensure that both parties comply with the Microcontract, the Rules governing the intended sharing are encoded 1003, 1004 in a specialized digital envelop which is stored as a protected data type with joint ownership by both parties. The system may encode terms and conditions in the form of a Microcontract The system prevents the Microcontract from being updated or deleted by either owner without mutual approval. The Microcontract may optionally be registered to a blockchain system 1006 to provide additional protections from tampering. In this event, the Rules reflecting the preserved Terms and Conditions in the Microcontract may be converted into executable computer code using a Turing-complete programming language to create what is known in the blockchain industry as a Smart Contract 1007. The resulting Smart Contract may then be sent as a transaction using the established APIs of the chosen blockchain implementation 1008. The system may respond to both the Requestor and the Owner with a notification of the initialization of the Microcontract that includes details of any optional Smart Contract publications 1009.

### The Microcontract

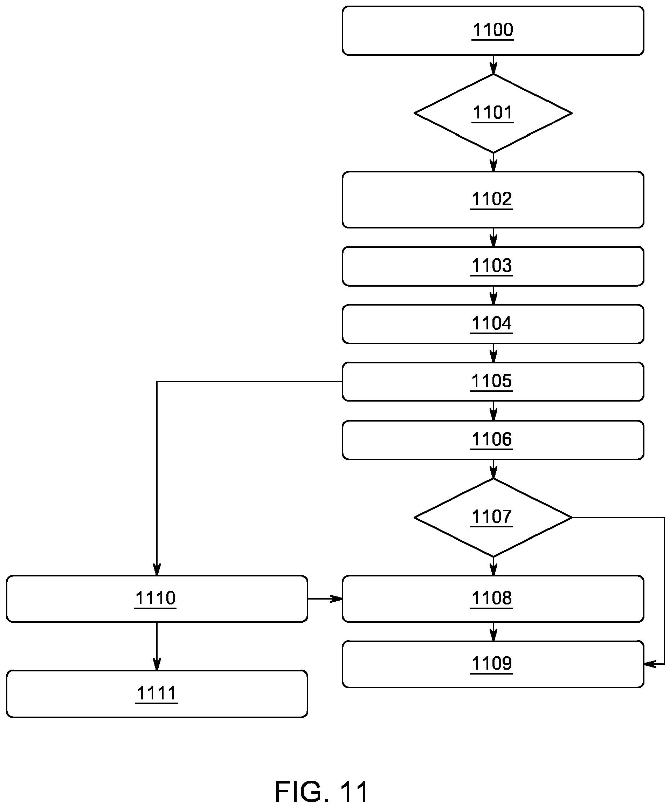

FIG. 11 further describes the Microcontract described in FIG. 10. The Microcontract may be regarded as a master set of Rules that supersedes any Rule established thereafter 1103, 1104, 1105 by the data owner as long as all Terms and Conditions remain in effect 1107. The system may receive a request for building data 1100, check for authorization 1101, find Shareables related to the building company 1102. Using external data streams to create context sources-the policy engine may confirm that payments are current, that the buyer maintains appropriate classifications in D&B, and that the volume and scope of the data remains at advertised levels 1106. As in other examples, the system may create Microshares containing build data 1108 followed by a Microshare list 1109, and a detailed audit record of each Grant 1110 that may be processed after the fact to create billing events 1111 or to establish compliance for fulfillment of legal discovery or regulatory reporting requirements.

### METHOD FOR REMOTE MONITORING OF RODENT ACTIVITY USING WIRELESS PASSIVE INFRARED SENSORS AND LONG-RANGE NETWORKS IN PEST TRAPS

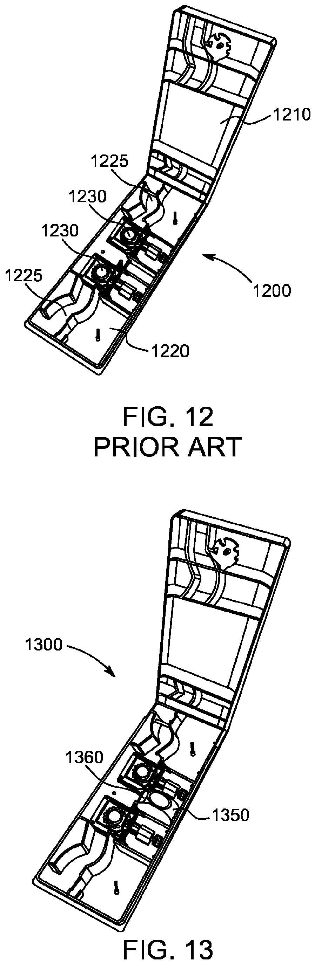

FIG. 12 shows a prior art pest trap 1200. The pest trap 1200 includes a top portion 1210 and bottom portion 1220 that may be hinged to one another as shown or otherwise removably (or not) secured to one another.

The bottom portion 1220 may include passages 1225 connected to areas outside the pest trap 1200. The passages are sized to fit the pest to be caught and lead to an area within the pest trap that includes the pest removal mechanism, The pest removal mechanism may be poison or other manner of killing the pest. As shown, the pest removal mechanism is a compression trap 1230 that clamps shut when a pest depresses an activation switch. Such traps are well known in the art. These traps 1230 normally include a base portion 1232 and clamp portion 1234, where the clamp portion closes on activation and the base portion can be used as a handle or carrying piece to remove the pest.

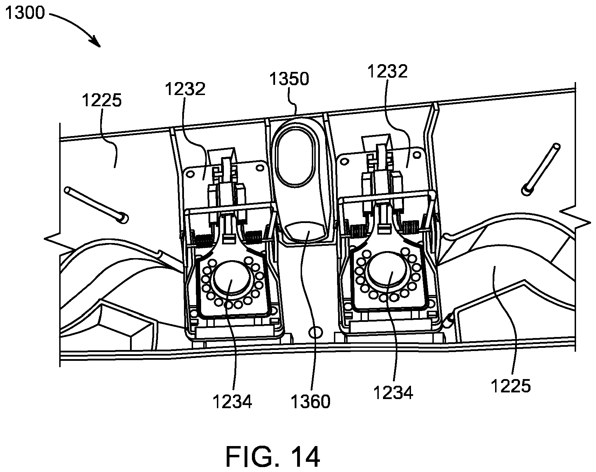

FIGS. 13 and 14 show an updated pest trap 1300 that may be used as an IOT networked device as previously discussed or an IOT device in any networked system. The pest trap 1300 includes a wireless (Pyroelectric ("Passive") InfraRed Sensors) PIR sensor 1350 that detects movement through its detector 1360. When the PIR sensor 1360 detects movement, the sensor sends a radio signal to a networked device that in turn alerts a user that the pest trap 1300 has been activated.

The PIR sensor 1350 may be retrofit into existing pest trap enclosures with the following characteristics: suitable space for the PIR sensor 1350 to be installed securely and enough space between the detector 1360 and the space where the rodent activity is expected.

In the pest trap 1300 shown, the PIR sensor 1350 is installed in a central position facing the path of a pest, and or the activation of the trap camp portion 11234 that may be activated. Thus, the detector 1360 may detect either motion of the pest or motion of the trap, either of which may require removal of the best and resetting the trap.

The detector 1360 may have a wide angle of detection of 127 degrees.

A distance of approximately 50mm between the front of the eye of the detector 1360 and an edge of the trap may provide the best view for reliable detection.

One current embodiment of the PIR sensor 1350 uses dimensions that are approximately 50mmx53mmx20mm and the PIR eye is approximately 8.5mm diameter in a trap with dimensions are approximately 300mm x 70mmx 120mm

The PIR sensor may be connected to a micro-controller that is configured with a proprietary detection settings for rodent movements. When selected movements are detected, the microcontroller may activate an on-board long-range radio to send a signal about the detection using an encrypted wireless signal that is received by a long-range network and securely delivered to cloud servers.

Any low-power secure connectivity could be used. A combination of LoRaWAN and TCP/IP may receive and securely forward all data messages coming from the sensors to the cloud servers.

Once the data is received by the servers from the network, it is decrypted, unpacked and processed, adding complementary information such as the trap location, trap type, data owner and associated sharing rules. Algorithms sanitize the data to confirm and analyze movements and eliminate false positives before informing (sending further signals/messages) the relevant parties who need to intervene, and tracking the processes post-detection, such as local intervention of the trap by a qualified technician.

While the invention has been described with reference to the embodiments above, a person of ordinary skill in the art would understand that various changes or modifications may be made thereto without departing from the scope of the claims.

**Table 1 (Fig. 1a)**

| Reference No. | Description |
|---|---|
| 100 | OWNERS CONTRIBUTE SHAREABLES AND DEFINE RULES & VIEWS |
| 102 | DATA CONTRIBUTORS |
| 104 | IoT NETWORKED DEVICE |
| 106 | OPERATIONAL SYSTEM |
| 108 | TRANSACTIONAL SYSTEM |
| 110 | REQUESTORS CONSUME SHAREABLES |
| 112 | DATA CONSUMERS |
| 114 | IoT ACTUATORS |
| 116 | ANALYTICS ENGINE |
| 118 | APPLICATIONS |
| 120 | API MANAGER [COMPONENT: API EXECUTION ENGINE] RESPONDS TO EXTERNAL REQUEST VIA REAL-TIME RESPONSE, WEB SOCKET, OR FILE IMPORT/EXPORT |
| 122 | AUTHORIZATION MANAGER [COMPONENT: IDENTITY INTEGRATION ENGINE] VALIDATES REQUESTOR IDENTITIES AGAIN INTERNAL AND EXTERNAL IDENTITY REPOSITORIES |
| 124 | POLICY FABRIC [COMPONENT: RULES ENGINE] EVALUATES REQUEST FOR DATA IN CONTEXT OF RULES EXPRESSED BY MULTIPLE OWNERS. |
| 126 | RULES & VIEWS |
| 128 | EXHAUSTIVE AUDIT DATA |
| 130 | VIRTUAL DATA LAKE [COMPONENT: DATA STORAGE] STORES SHAREABLES: INDEX OBJECTS PROVIDES LOCAL STORAGE OR A CHANNEL TO REMOTE STORAGE FOR DATA ASSETS |
| 132 | LOCAL STORAGE |
| 134 | ENTERPRISE IDENTITY eg. LDAP, AD |
| 136 | ENTERPRISE STORAGE eg. ORACLE, SHAREPOINT |
| 138 | ENTERPRISE SYSTEM BOUNDARY |
| 140 | CLOUD IDENTITY eg. OAUTH, AZURE AD |
| 142 | CLOUD STORAGE eg. DROPBOX, AMAZON S3 |
| 144 | CLOUD SYSTEM BOUNDARY |
| 146 | SMART CONTRACT BLOCKCHAIN |
| 148 | BLOCKCHAIN SYSTEM BOUNDARY |
| 150 | APIs |
| 152 | SYSTEM OVERVIEW |
| 154 | MICROSHARE MICROSERVICES ARCHITECTURE |

**Table 2 (Fig. 1b)**

| Reference No. | Description |
|---|---|
| 10 | OWNER |
| 11 | AUTH REQUEST |
| 12 | POST REQUEST W/TOKEN |
| 20 | API MANAGER |
| 21 | AUTHENTICATION |
| 22 | AUTH RESPONSE |
| 23 | AUTHENTICATION |
| 24 | SAVE COMMAND W/OWNER ATTRIBUTES |
| 25 | API RESPONSE |
| 30 | AUTHORIZATION MANAGER |
| 31 | IDENTITY CHECK |
| 32 | AUTH TOKEN |
| 33 | OWNER ATTRIBUTES |
| 40 | IDENTITY MANAGER |
| 41 | IDENTITY DETAILS |
| 50 | VIRTUAL DATA LAKE |
| 51 | OWNERSHIP ATTRIBUTION REQUEST |
| 52 | OBJECT SAVE |
| 53 | ACKNOWLEDGEMENT |
| 60 | DATA STORAGE |
| 61 | SAVE RESPONSE |
| 63 | INDEX OBJECT SAVE |
| 64 | SAVE RESPONSE |
| 70 | POLICTY FABRIC |
| 71 | ATTRIBUTION 0 |
| 72 | OWNERSHIP ATTRIBUTES ARRAY |

**Table 3 (Fig. 1c)**

| Reference No. | Description |
|---|---|
| 10 | REQUESTOR |
| 01 | AUTH REQUEST |
| 02 | GET REQUEST W/TOKEN |
| 20 | API MANAGER |
| 21 | AUTHENTICATION |
| 22 | AUTH RESPONSE |
| 23 | AUTHENTICATION |
| 25 | API RESPONSE |
| 26 | SHAREABLE QUERY |
| 30 | AUTHORIZATION MANAGER |
| 31 | IDENTITY CHECK |
| 32 | AUTH TOKEN |
| 33 | REQUESTOR ATTRIBUTES |
| 40 | IDENTITY MANAGER |
| 41 | IDENTITY DETAILS |
| 50 | VIRTUAL DATA LAKE |
| 54 | CANDIDATE METADATA COLLECTION |
| 55 | MICROSHARE |
| 60 | DATA STORAGE |
| 62 | CANDIDATE RESPONSE |
| 65 | INDEX QUERY |
| 70 | POLICY FABRIC |
| 73 | RULE QUERY |
| 74 | MICROCONTRACT QUERY |
| 75 | RULE EVALUATION 0 |
| 76 | FILTERED COLLECTION |
| 80 | RULE STRORAGE |
| 81 | CANDIDATE RULE |
| 82 | RULE MATCH 0 |
| 90 | BLOCKCHAIN |
| 91 | CANDIDATE RULE |

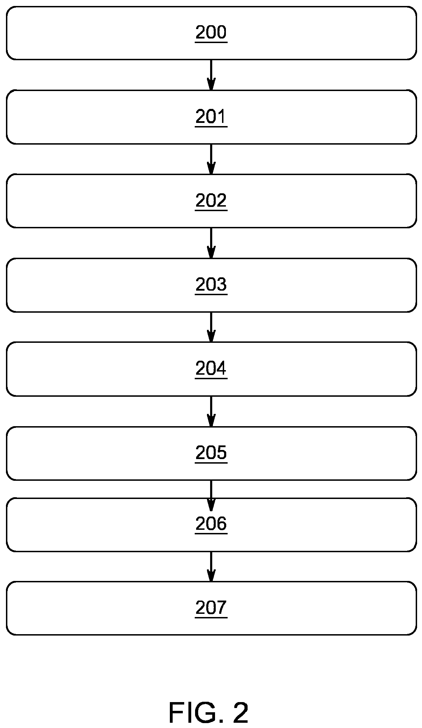

**Table 4 (Fig. 2)**

| Reference No. | Description |
|---|---|
| 200 | PHYSICIAN ENTERS NOTES INTO EMR UI |
| 201 | EMR AUTHENTICATES TO SYSTEM USING REST API TO ESTABLISH IDENTITY OF PHYSICIAN AND ORGANIZATION |
| 202 | SYSTEM RECEIVED DATA FROM EMR |
| 203 | SYSTEM ATTRIBUTES BY OWNERSHIP TO PHYSICIAN AS THE AUTHENTICATED USER |
| 204 | SYSTEM CREATES SHAREABLE FROM INPUT DATA |
| 205 | SYSTEM STORES SHAREABLE ACCORDING TO CONFIGURED LOGIC (LOCAL, REMOTE, OR HYBRID) |
| 206 | SYSTEM ATTRIBUTES PATIENT AS ABOUT OWNER BASED ON RULES AND INPUT DATA |
| 207 | SYSTEM STORED INDEX OBJECTS FOR EACH OWNER ASSOCIATED WITH SHAREABLE |

**Table 5 (Fig. 3)**

| Reference No. | Description |
|---|---|
| 300 | SYSTEM ALLOWS PATIENTTO DEFINE RULE FOR COVERING READ-ONLY ACCESS FOR PCP |
| 301 | SYSTEM ALLOWS PATIENTTO DEFINE RULE FOR COVERING READ-ONLY ACCESS FOR EMERGENCY |
| 302 | SYSTEM RECEIVES REQUEST FOR PATIENT DATA |
| 303 | IS REQUESTOR AUTHORIZED? |
| 303a | CHECK CREDENTIALS |
| 304 | SYSTEM FINDS SHAREABLES RELATED TO THE PATIENT |
| 305 | SYSTEM IDENTIFIES RULES APPLICABLE TO CANDIDATE SHAREABLES |
| 306 | SYSTEM EVALUATES RULES SET BY PATIENT (AT STEP 1 AND STEP 2 ABOVE) |
| 307 | IS REQUESTOR A PHYSICIAN? |
| 308 | SYSTEM LOCATES CONTEXTUAL CUE ABOUT PATIENT CURRENT LOCATION |
| 309 | IS PATIENT LOCATED INSIDE HOSPITAL BOUNDARIES? |
| 310 | SYSTEM CREATES MICROSHARE CONTAINING PATIENT'S EMR RECORDS |
| 311 | SYSTEM CREATES EXHAUSIVE AUDIT OF EACH RECORD/RULE COMBINATION CONSIDERED |
| 312 | SYSTEM RESPONDS TO REQUEST WITH MICROSHARE LIST WITH 0 TO N ENTRIES |

**Table 6 (Fig. 4)**

| Reference No. | Description |
|---|---|
| 400 | SYSTEM RECEIVED DATA FROM SMART HOME SYSTEMS INCLUDING HOME SECURITY DEVICES (eg. CODE PAD, WINDOW/DOOR SENSORS, MOTION DETECTORS) |
| 401 | SYSTEM ATTRIBUTES BY OWNERSHIP TO HOME OWNER AS THE AUTHENTICATED USER |
| 402 | SYSTEM CREATES SHAREABLE FROM INPUT DATA |
| 403 | SYSTEM STORES SHAREABLE ACCORDING TO CONFIGURED LOGIC (LOCAL, REMOTE, OR HYBRID) |
| 404 | SYSTEM STORED INDEX OBJECTS FOR EACH OWNER ASSOCIATED WITH SHAREABLE |
| 405 | SYSTEM ALLOWS HOME OWNER TO DEFINE VIEW TO AGGREGATE SECURITY DATA |
| 406 | SYSTEM ALLOWS PATIENTTO DEFINE RULE ALLOWING EXECUTE ACCESS TO THE VIEW (DEFINED AT STEP 1) INSURANCE UNDERWRITERS |
| 407 | SYSTEM RECEIVES REQUEST FOR SECURITY DATA |
| 408 | IS REQUESTOR AUTHORIZED? |
| 408a | CHECK CREDENTIALS |
| 409 | SYSTEM FINDS SHAREABLES (BOTH DATA AND VIEWS) RELATED TO THE HOME OWNER AND SECURITY DOMAIN |
| 410 | SYSTEM IDENTIFIES RULES APPLICABLE TO CANDIDATE SHAREABLES |
| 410a | SYSTEM SEEKS RULES GOVERNING RAW DATA |
| 410b | DO RAW DATA EXIST? |
| 410c | ALWAYS SYSTEM SEEKS RULES GOVERNING VIEW DATA |
| 410d | DO VIEW RULE EXIST? |
| 411 | SYSTEM EVALUATES RULES SET BY HOME OWNER (AT STEP 1 ABOVE) |
| 412 | IS REQUESTOR AN UNDERWRITER FOR AAACo? |
| 413 | SYSTEM EXECUTES VIEW AGAINST DATA AVAILABLE TO HOME OWNER |
| 414 | SYSTEM CREATES MICROSHARE CONTAINING DATA DERIVED FROM THE VIEW CONTAINING LICENSE RESTRICTION |
| 415 | SYSTEM RESPONDS TO REQUEST WITH MICROSHARE LIST WITH 0 TO N ENTRIES |
| 416 | SYSTEM CREATES EXHAUSIVE AUDIT OF EACH RECORD/RULE COMBINATION CONSIDERED |

**Table 7 (Fig. 5)**

| Reference No. | Description |
|---|---|
| 500 | SYSTEM RECEIVED DATA FROM DIESEL ENGINE SENSORS (eg. LOCATION, VIBRATION, TEMPERATURE) |
| 501 | SYSTEM ATTRIBUTES ORIGINATOR OWNERSHIP TO ENGINE MANUFACTURER AS THE AUTHENTICATED USER |
| 502 | SYSTEM CREATES SHAREABLE FROM INPUT DATA |
| 503 | SYSYSTEM STORES SHAREABLE ACCORDING TO CONFIGURED LOGIC (LOCAL, REMOTE, OR HYBRID) |
| 504 | SYSTEM LOCATES CONTEXTUAL CUE TO CORRELATE SENSOR ID TO ENGINE NUMBER |
| 505 | SYSTEM LOCATES CONTEXTUAL CUE TO ENGINE NUMBER BILL OF SALES TO FIND PURCHASER |
| 506 | DID BUS MANUFACTURER PURCHASE ENGINE? |
| 506a | BEGIN OWNERSHIP LOGIC |
| 507 | SYSTEM ATTRIBUTES BUS MANUFACTURER AS A SECONDARY OWNER |
| 508 | REPEAT FOR EACH SECONDARY OWNER RELATIONSHIP |
| 509 | SYSTEM STORED INDEX OBJECTS FOR EACH OWNER ASSOCIATED WITH SHAREABLE |

**Table 8 (Fig. 6)**

| Reference No. | Description |
|---|---|
| 600 | SYSTEM ALLOWS BUS OPERATOR TO DEFINE RULE ALLOWING QUERY ACCESS TO TH E VIEW TO ANY GOVERNMENTAL ORGANIZATION (.GOV DOMAIN) |
| 601 | SYSTEM RECEIVES REQUEST FOR SENSOR DATA |
| 602 | IS REQUESTOR AUTHORIZED? |
| 603 | SYSTEM FINDS SHAREABLES (BOTH DATA AND VIEWS) RELATED TO THE BUS OPERATOR AND BUS LOCATION/PERFORMANCE |
| 604 | SYSTEM IDENTIFIES RULES APPLICABLE TO CANDIDATE SHAREABLES |
| 605 | SYSTEM EVALUATES RULES SET BY BUS OPERATOR (AT STEP 1 ABOVE) |
| 606 | IS REQUESTOR A GOVERNMENT EMPLOYEE? |
| 607 | SYSTEM LOCATES CONTEXTUAL CUE ABOUT CURRENT BUS LOCATION |
| 608 | IS BUS LOCATED WITHIN 2 MILES OF REQUESTOR LOCATION |
| 609 | SYSTEM CREATES MICROSHARE CONTAINING DATA DERIVED FROM THE VIEW ONLY |
| 610 | SYSTEM CREATES EXHAUSIVE AUDIT OF EACH RECORD/RULE COMBINATION CONSIDERED |
| 611 | DOES MICROSHARE CONFLICT WITH PRIMARY OWNER RULES? |
| 612 | CAN CONFLICT RESOLVE AUTOMATICALLY? |
| 613 | SYSTEM REQUESTS HUMAN APPROVAL |
| 614 | SYSTEM TAKES COMPENSATING ACTION |
| 615 | SYSTEM RESPONDS TO REQUEST WITH MICROSHARE LIST WITH 0 TO N ENTRIES |

**Table 9 (Fig. 7)**

| Reference No. | Description |
|---|---|
| 700 | SYSTEM RECEIVED DATA FROM WASHING MACHINE |
| 701 | SYSTEM ATTRIBUTES PRIMARY OWNERSHIP TO MANUFACTURER A AS THE AUTHENTICATED USER |
| 702 | SYSTEM CREATES SHAREABLE FROM INPUT DATA |
| 703 | SYSTEM STORES SHAREABLE ACCORDING TO CONFIGURED LOGIC (LOCAL, REMOTE, OR HYBRID) |
| 704 | SYSTEM LOCATES CONTEXTUAL CUE ABOUT WARRANTEE HOLDERS |
| 705 | SYSTEM ATTRIBUTES RENTER AS WARRANTEE OWNER BASED ON RULES AND INPUT DATA |
| 706 | SYSTEM STORED INDEX OBJECTS FOR EACH OWNER ASSOCIATED WITH SHAREABLE |
| 707 | SYSTEM RECEIVED DATA FROM REFRIGERATOR |
| 708 | SYSTEM ATTRIBUTES PRIMARY OWNERSHIP TO MANUFACTURER B AS THE AUTHENTICATED USER |
| 709 | SYSTEM CREATES SHAREABLE FROM INPUT DATA |
| 710 | SYSTEM STORES SHAREABLE ACCORDING TO CONFIGURED LOGIC (LOCAL, REMOTE, OR HYBRID) |
| 711 | SYSTEM LOCATES CONTEXTUAL CUE ABOUT WARRANTEE HOLDERS |
| 712 | SYSTEM ATTRIBUTES LANDLORD AS WARRANTEE OWNER BASED ON RULES AND INPUT DATA |
| 713 | SYSTEM STORED INDEX OBJECTS FOR EACH OWNER ASSOCIATED WITH SHAREABLE |
| 714 | VIRTUAL DATA STORAGE |

**Table 10 (Fig. 8)**

| Reference No. | Description |
|---|---|
| 801 | SYSTEM ALLOWS LANDLORD TO DEFINE VIEW TO FILTER ENERGY USAGE FOR REFRIGERATORS BY RENTER |
| 802 | SYSTEM ALLOWS LANDLORD TO CREATE A RULE GRANTING EXECUTE ACCESS TO REFRIGERATOR DATA BY RENTER |
| 803 | SYSTEM ALLOWS RENTER TO DEFINE RULE ALLOWING READ ACCESS TO TH E APPLIANCE ENERGY USAGE TO UTILITY COMPANY SYSTEMS |
| 804 | SYSTEM RECEIVES REQUEST FOR ENERGY USAGE DATA |
| 805 | IS REQUESTOR AUTHORIZED? |
| 806 | SYSTEM FINDS SHAREABLE (BOTH DATA AND VIEW) RELATED TO THE RENTER AND MAJOR APPLIANCE DOMAIN |
| 807 | SYSTEM IDENTIFIES RULES APPLICABLE TO CANDIDATE SHAREABLES |
| 808 | SYSTEM EVALUATES RULES SET BY RENTER |
| 809 | IS REQUESTOR AN EMPLOYEE OF THE UTILITY COMPANY? |
| 810 | DO RESULTS INCLUDE SOMEONE ELSE'S DATA? |
| 811 | SYSTEM EXECUTES VIEW WITH THE BASE PERMISSION OF THE LANDLORD |
| 812 | SYSTEM CREATES MICROSHARE CONTAINING DATA DERIVED FROM THE VIEW AND RAW DATA |
| 813 | SYSTEM RESPONDS TO REQUEST WITH MICROSHARE LIST WITH 0 TO N ENTRIES |

**Table 11 (Fig. 9)**

| Reference No. | Description |
|---|---|
| 901 | SYSTEM RECEIVED, STORES, AND ATTRIBUTES OWNERSHIP TO CREATE SHAREABLES FROM BUILDING DATA |
| 902 | SYSTEM ALLOWS BUILDING OWNER TO DEFINE VIEWS TO ANONYMIZE AND AGGREGATE BUILDING DATA |
| 903 | SYSTEM ALLOWS BUILDING OWNER TO DEFINE A SAMPLE VIEW TO CREATE A LIMITTED SEGMENT OF ANONYMIZED AND AGGREGATED BUILDING DATA |
| 904 | SYSTEM ALLOWS LANDLORD TO CREATE A RULES DEFINING EXECUTE ACCESS TERMS AND CONDITIONS INCLUDE FEES |
| 905 | SYSTEM RECEIVES DISCOVERY REQUEST FROM UTILITY COMPANY |
| 906 | IS REQUESTOR AUTHORIZED? |
| 907 | SYSTEM FINDS SHAREABLES (BOTH DATA AND VIEWS) RELATED TO THE BUILDING DATA IN SUBJECT LOCATION |
| 908 | SYSTEM IDENTIFIES RULES APPLICABLE TO CANDIDATE SHAREABLES |
| 909 | SYSTEM EVALUATES RULES SET BY BUILDING OWNER(S) |
| 910 | SYSTEM LOCATES CONTEXTUAL CUE ABOUT REQUESTOR COMPANY FROM D&B RECORD |
| 911 | IS REQUESTOR AN EMPLOYEE OF NON-PROPERTY OWNER? |
| 912 | SYSTEM CREATES MICROSHARE CONTAINING DATA INCLUDING THE SAMPLE VIEW DEFINED BY BUILDING OWNER |
| 913 | SYSTEM RESPONDS TO REQUEST WITH MICROSHARE LIST WITH 0 TO N ENTRIES |
| 914 | UTILITY COMPANY REVIEWS DATA QUALITY, TERMS AND CONDITIONS, AND LICENSE RESTRICTION |

**Table 12 (Fig. 10)**

| Reference No. | Description |
|---|---|
| 1000 | SYSTEM RECEIVES REQUEST FOR MICROCONTRACT FROM UTILITY COMPANY FOR DATA FROM BUILDING OWNER |
| 1001 | IS REQUESTOR AUTHORIZED? |
| 1002 | SYSTEM FINDS SHAREABLES (BOTH DATA AND VIEWS) RELATED TO TH E BUILDING DATA IN SUBJECT LOCATION |
| 1003 | SYSTEM IDENTIFIES RULES AND VIEWS APPLICABLE TO CANDIDATE SHAREABLES |
| 1004 | SYSTEM ENCODES RULES AND VIEWS IN THE FORM OF MICROCONTRACT |
| 1005 | SYSTEM ENCODES TERMS AND CONDITIONS IN THE FORM OF MICROCONTRACT |
| 1006 | IS MICROCONTRACT APPLICABLE FOR BLOCKCHAIN? |
| 1007 | SYSTEM CREATES TRANSLATES MICROCONTRACT INTO TURNING- COMPLETE SCRIPT (eg. SOLIDITY) AKA SMART CONTRACT |
| 1008 | SYSTEM CREATES SEND SMARTCONTRACT TRANSACTION TO BLOCKCHAIN |
| 1009 | SYSTEM RESPONDS TO REQUEST WITH MICROCONTRACT LIST WITH 0 TO N ENTRIES |

**Table 13 (Fig. 11)**

| Reference No. | Description |
|---|---|
| 1100 | SYSTEM RECEIVES REQUEST FOR BUILDING DATA FROM UTILITY COMPANY |
| 1101 | IS REQUESTOR AUTHORIZED? |
| 1102 | SYSTEM FINDS SHAREABLES RELATED TO TH E BUILDING COMPANY |
| 1103 | SYSTEM IDENTIFIES RULES APPLICABLE TO CANDIDATE SHAREABLES |
| 1104 | SYSTEM IDENTIFIES MICROCONTRACTS APPLICABLE TO CANDIDATE SHAREABLES AND REQUESTORS |
| 1105 | SYSTEM EVALUATES BOTH DYNAMIC AND PRESERVED RULES |
| 1106 | SYSTEM LOCATES CONTEXTUAL CUE ABOUT TERMS AND CONDITIONS INCLUDING CURRENT PAYMENTS STREAM |
| 1107 | ARE T&Cs MET? |
| 1108 | SYSTEM CREATES MICROSHARE CONTAINING BUILD DATA |
| 1109 | SYSTEM RESPONDS TO REQUEST WITH MICROSHARE LIST WITH 0 TO N ENTRIES |
| 1110 | SYSTEM CREATES EXHAUSIVE AUDIT OF EACH RECORD/RULE COMBINATION CONSIDERED |
| 1111 | SYSTEM CREATES BILLING EVENTS BASED ON EXHAUSTIVE AUDIT RECORD |

## Claims

1. A system that manages shared assets comprising:
networked devices that are arranged to:
store at least one shareable asset that represents data from source content through an API manager or data indexing;
register one or more accounts designated as owners with joint rights of ownership to the at least one shareable asset;
register a request that requests data from the at least one shareable asset via a query; and
store a policy fabric that is executed as a computer code on a computation device, wherein the computation device is arranged to:
annotate both static and dynamic ownership rights to shareable assets through the use of metadata associated with the shareable asset;
create one or more rules from the one or more accounts, wherein the rules define attributes of shareable assets including at least access rights to the shareable assets;
identify applicable rules via comparison between the data structures contained within the one or more rules and the attributes of the owner, data from the at least one shareable asset being requested, attributes of the requestor, and contextual reference information; and
apply the applicable rules as a filter that allows or disallows inclusion of shared assets in a query response when the requestor requests access to a shareable asset with protections for conflicting interests of multiple accounts; and
resolve management of the conflicting interests of multiple owners;
wherein the source content includes digitally represented assets that include physical objects trackable using a sensor;
wherein the networked devices are arranged to interact with one another through an API manager, wherein the API manager is arranged to interface with system users based on user credentials;
wherein the networked device is a pest trap.

2. The system of claim 1, wherein the pest trap comprises a Pyroelectric InfraRed (PIR) Sensor that detects movement.

3. The system of claim 1, wherein the pest trap comprises a Pyroelectric InfraRed (PIR) Sensor that upon detection of movement, is arranged to send a signal to a server that is arranged to analyze the movement and either sends or does not send a signal to a user based on the analysis.

4. The system of claim 1, wherein the source content is arranged to be generated by other digital systems.

5. The system of claim 1, wherein attributes of shareable assets include an annotation for each shareable asset with ownership metadata in a structured format.

6. The system of claim 5, wherein the annotations are arranged to stored either with the source content or separately with associations created through one or more common identifiers to that allow shareable assets to be tracked and managed.

7. The system of claim 5, wherein the annotations are arranged to attribute ownership to multiple parties through metadata that represents a hierarchical arrangement of entities using nested arrays or similar data structures with variable depth.

8. The system of claim 5, wherein the policy fabric is arranged to create ownership metadata annotations-based on context of the data itself or data from external sources.

9. The system of claim 1, wherein the application of rules is arranged to allow for potential grant of contextual access to the data from the source content.

10. The system of claim 11, wherein potential grants of contextual access are arranged to be accomplished according to the rules and provide for multi-party collaboration.

11. The system of claim 1, wherein the policy fabric is arranged to provide privacy and security settings that can be set.

12. The system of claim 1, wherein the policy fabric is arranged to provide for contractual arrangements between shareable assets.

13. The system of claim 12, wherein the contractual arrangements are arranged to be rendered into machine executable smart contracts.

14. The system of claim 13, wherein the smart contracts are arranged to be recorded on a blockchain.

15. Method of managing shared assets comprising the steps of:
providing networked devices wherein at least one networked device is a pest traps and providing a computation device, wherein:
the networked devices perform the steps of storing at least one shareable asset that represents data from source content through an API manager or data indexing;
registering one or more accounts designated as owners with joint rights of ownership to the at least one shareable asset;
registering a request that requests data from the at least one shareable asset via a query; and
storing a policy fabric that is executed as a computer code on the computation device, wherein the computation device performs the steps of:
annotating both static and dynamic ownership rights to shareable assets through the use of metadata associated with the shareable asset;
creating one or more rules from the one or more accounts, wherein the rules define attributes of shareable assets including at least access rights to the shareable assets;
identifying applicable rules via comparison between the data structures contained within the one or more rules and the attributes of the owner, data from the at least one shareable asset being requested, attributes of the requestor, and contextual reference information; and
applying the applicable rules as a filter that allows or disallows inclusion of shared assets in a query response when the requestor requests access to a shareable asset with protections for conflicting interests of multiple accounts; and
resolving management of the conflicting interests of multiple owners;
wherein the source content includes digitally represented assets that include physical objects tracked using a sensor; and
wherein the networked devices interact with one another through an API manager, wherein the API manager interfaces with system users based on user credentials.
